# EUROPEAN PATENT APPLICATION

(11) **EP 4 657 834 A1**
(43) Date of publication of application: **03.12.2025**
(21) Application number: 25178624.0
(22) Date of filing: 23.05.2025
(51) Int. Cl.: H04L 67/12, G08G 1/09, H04L 47/62, H04L 51/226, H04L 67/61, H04W 4/40, H04W 4/46

(54) **METHOD AND APPARATUS FOR TRANSFERRING MESSAGES TO VEHICLES USING MESSAGE QUEUES**

(30) Priority: 29.05.2024 FI 20245686
(71) Applicant: Nokia Solutions and Networks Oy, 02610 Espoo (FI)
(72) Inventor: ENRICI, Andrea, Bourg la Reine (FR); NATARIANNI, Lionel, Nogent-Sur-Marne (FR)
(74) Representative: Nokia EPO representatives

(57) **Abstract**

An apparatus comprises means for: storing a plurality of message queues associated with respective priorities in a scale of priorities assigned locally by the apparatus; receiving a message to be transmitted to one or more destination vehicles in a vehicle formation; determining, from the scale of priorities, a priority for the received message by applying a priority assignment algorithm based at least on vehicle formation information related to the vehicle formation; storing the received message in the message queue corresponding to the priority determined for the received message; controlling extraction of messages from the plurality of message queues for transmission to one or more vehicles in the vehicle formation according to an extraction order based at least on the respective priorities of the plurality of message queues.

## Description

### TECHNICAL FIELD

Various example embodiments relate generally to a method for transferring messages to vehicles and a corresponding apparatus.

### BACKGROUND

In the context of connected vehicles (e.g., in vehicular networks), many messages may be transmitted to the vehicle. The messages may be transmitted for example according to a publisher/subscriber (Pub/Sub) paradigm.

A connected vehicle may for example continuously acquire information on its driving surroundings by subscribing the shared sight of certain neighbours. From the perspective of the Pub/Sub paradigm, a vehicle that wants to share (publish) data (e.g., sensed data or computing results) registers for corresponding a topic as a data source. Neighbouring vehicles that are interested in the data need to subscribe to the topic to continually receive the data produced by the publisher.

The vehicles move in space and time, e.g., vehicles may leave/join formations of vehicles (local networks) according to traffic conditions or destination. Further connected vehicles have to respond to priority actions (acceleration, braking) in real time to ensure the safety of connected vehicle traffic. Vehicles such as cars, trucks, are subject to safety and security constraints to preserve passengers' lives and are latency critical. Further, the role of a vehicle in a vehicle formation may evolve over time: at any moment a vehicle can become the leader of a formation and may be used as message broker for the vehicle formation.

There is a need for a mechanism to efficiently transmit messages to vehicles in a vehicle formation.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

Various example embodiments relate generally to a method for transferring messages to vehicles in a vehicle formation using message queues and a corresponding apparatus. The vehicles may be connected vehicles and/or autonomous vehicles.

According to a first aspect, a method adapted for being executed by an apparatus comprises: storing a plurality of message queues associated with respective priorities in a scale of priorities assigned locally by the apparatus; receiving a message to be transmitted to one or more destination vehicles in a vehicle formation; determining, from the scale of priorities, a priority for the received message by applying a priority assignment algorithm based at least on vehicle formation information related to the vehicle formation; storing the received message in the message queue corresponding to the priority determined for the received message; controlling extraction of messages from the plurality of message queues for transmission to one or more vehicles in the vehicle formation according to an extraction order based at least on the respective priorities of the plurality of message queues.

The vehicle formation information may comprise at least one of: metadata associated with one or more vehicles in the vehicle formation, metadata associated with the vehicle formation, metadata associated with a route followed by one or more vehicles in the vehicle formation.

The vehicle formation information may comprise at least one of: information related to one or more times one or more vehicles joined the vehicle formation; information related to a position of a destination vehicle in the vehicle formation; information related to a distance between two vehicles in the vehicle formation; information related to a route followed by one or more vehicles in the vehicle formation; information related to a type of vehicles in the vehicle formation; information related to a role of the one or more destination vehicle(s) in the vehicle formation; information related to a topology of the vehicle formation.

The priority assignment algorithm may be based on at least one: one or more occupancy rates of one or more message queues, an external priority assigned to the message by an entity external to the apparatus, a message production rate of the source of the message, a number of times the message was rejected in the past by the apparatus due to full message queues, the lowest priority in the scale of priorities, statistical data generated for one or more messages received by the apparatus, information in a header or payload of the message, a type of the message, a topic or content of the message.

In embodiments, a number of time slots may be assigned to each of the message queues on the basis of the respective priority of the considered message queue, wherein controlling extraction of messages from the plurality of message queues may comprise: processing the message queues in the extraction order by complying with the number of time slots respectively assigned to the message queues.

The priority may be determined as a sum of a basis priority and an incremental priority. The incremental priority may be determined on the basis of at least one of: a number of times the message was rejected in the past by the apparatus due to full message queues and a message production rate of the source of the message. The basis priority may be either an external priority assigned to the message by an entity external to the apparatus or the lowest priority in the scale of priorities.

The method may comprise: transferring at least one message from a first message queue to a second message queue on the basis of at least one of: the respective occupancy rates of the first and second message queues, a residence time of the at least one message in the first message queue or the respective priorities of the first and second message queues, metadata associated with one or more message queues, statistical data generated for one or more messages received by the apparatus, information in a header or payload of one or more messages in one or more message queues.

The determined priority may increase as a function of the number of times the message was rejected in the past by the apparatus due to full message queues.

The priority assignment algorithm may be specific to the vehicle formation.

The method may comprise: receiving a control message for configuring the priority assignment algorithm.

According to a second aspect, an apparatus comprises means for: storing a plurality of message queues associated with respective priorities in a scale of priorities assigned locally by the apparatus; receiving a message to be transmitted to one or more destination vehicles in a vehicle formation; determining, from the scale of priorities, a priority for the received message by applying a priority assignment algorithm based at least on vehicle formation information related to the vehicle formation; storing the received message in the message queue corresponding to the priority determined for the received message; controlling extraction of messages from the plurality of message queues for transmission to one or more vehicles in the vehicle formation according to an extraction order based at least on the respective priorities of the plurality of message queues.

The vehicle formation information may comprise at least one of: metadata associated with one or more vehicles in the vehicle formation, metadata associated with the vehicle formation, metadata associated with a route followed by one or more vehicles in the vehicle formation.

The vehicle formation information may comprise at least one of: information related to one or more times one or more vehicles joined the vehicle formation; information related to a position of a destination vehicle in the vehicle formation; information related to a distance between two vehicles in the vehicle formation; information related to a route followed by one or more vehicles in the vehicle formation; information related to a type of vehicles in the vehicle formation; information related to a role of the one or more destination vehicle(s) in the vehicle formation; information related to a topology of the vehicle formation.

The priority assignment algorithm may be based on at least one: one or more occupancy rates of one or more message queues, an external priority assigned to the message by an entity external to the apparatus, a message production rate of the source of the message, a number of times the message was rejected in the past by the apparatus due to full message queues, the lowest priority in the scale of priorities, statistical data generated for one or more messages received by the apparatus, information in a header or payload of the message, a type of the message, a topic or content of the message.

In embodiments, a number of time slots may be assigned to each of the message queues on the basis of the respective priority of the considered message queue, wherein the means for controlling extraction of messages from the plurality of message queues may be configured to process the message queues in the extraction order and by complying with the number of time slots respectively assigned to the message queues.

The means for determining the priority may be configured to determine the priority as a sum of a basis priority and an incremental priority. The incremental priority may be determined on the basis of at least one of: a number of times the message was rejected in the past by the apparatus due to full message queues and a message production rate of the source of the message. The basis priority may be either an external priority assigned to the message by an entity external to the apparatus or the lowest priority in the scale of priorities.

The apparatus may comprise means for transferring at least one message from a first message queue to a second message queue on the basis of at least one of: the respective occupancy rates of the first and second message queues, a residence time of the at least one message in the first message queue or the respective priorities of the first and second message queues, metadata associated with one or more message queues, statistical data generated for one or more messages received by the apparatus, information in a header or payload of one or more messages in one or more message queues.

The determined priority may increase as a function of the number of times the message was rejected in the past by the apparatus due to full message queues.

The priority assignment algorithm may be specific to the vehicle formation.

The apparatus may comprise means for receiving a control message for configuring the priority assignment algorithm.

The means of the apparatus may be adapted for performing one or more or all steps of the method according to the first aspect. The means may include at least one processor and at least one memory storing instructions that, when executed by the at least one processor, cause the apparatus to perform one or more or all steps of a method according to the first aspect. The means may include circuitry (e.g., processing circuitry) to perform one or more or all steps of a method according to the first aspect.

According to another aspect, an apparatus comprises at least one processor and at least one memory storing instructions that, when executed by the at least one processor, cause the apparatus to perform at least: storing a plurality of message queues associated with respective priorities in a scale of priorities assigned locally by the apparatus; receiving a message to be transmitted to one or more destination vehicles in a vehicle formation; determining, from the scale of priorities, a priority for the received message by applying a priority assignment algorithm based at least on vehicle formation information related to the vehicle formation; storing the received message in the message queue corresponding to the priority determined for the received message; controlling extraction of messages from the plurality of message queues for transmission to one or more vehicles in the vehicle formation according to an extraction order based at least on the respective priorities of the plurality of message queues. The instructions, when executed by the at least one processor, may cause the apparatus to perform one or more or all steps of a method according to the first aspect.

According to another aspect, a computer program comprises instructions that, when executed by an apparatus, cause the apparatus to perform: storing a plurality of message queues associated with respective priorities in a scale of priorities assigned locally by the apparatus; receiving a message to be transmitted to one or more destination vehicles in a vehicle formation; determining, from the scale of priorities, a priority for the received message by applying a priority assignment algorithm based at least on vehicle formation information related to the vehicle formation; storing the received message in the message queue corresponding to the priority determined for the received message; controlling extraction of messages from the plurality of message queues for transmission to one or more vehicles in the vehicle formation according to an extraction order based at least on the respective priorities of the plurality of message queues. The instructions may cause the apparatus to perform one or more or all steps of a method according to the first aspect.

According to another aspect, a non-transitory computer readable medium comprises computer program instructions stored thereon for causing an apparatus to perform at least the following: storing a plurality of message queues associated with respective priorities in a scale of priorities assigned locally by the apparatus; receiving a message to be transmitted to one or more destination vehicles in a vehicle formation; determining, from the scale of priorities, a priority for the received message by applying a priority assignment algorithm based at least on vehicle formation information related to the vehicle formation; storing the received message in the message queue corresponding to the priority determined for the received message; controlling extraction of messages from the plurality of message queues for transmission to one or more vehicles in the vehicle formation according to an extraction order based at least on the respective priorities of the plurality of message queues. The computer program instructions may cause the apparatus to perform one or more or all steps of a method according to the first aspect.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 represents in a schematic and simplified way a communication system according to an example.
FIG. 2 is a functional diagram of a broker according to an example.
FIG. 3 shows a flowchart of a method for assigning internal priorities according to an example.
FIG. 4 shows a flowchart of a method for transferring messages between message queues according to an example.
FIG. 5 is a flowchart illustrating a method for transferring messages to vehicles in a vehicle formation using message queues according to an example.
FIG. 6 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

A method and broker for assigning priorities to messages and managing transmission of messages to destination vehicles based on the assigned internal priorities are disclosed. The method relies on an internal priority mechanism applied locally by the broker to messages received by the broker. The internal priority mechanism allows to manage/assign internal priorities dynamically based on vehicle formation information to take into account vehicle formation specificity or needs.

A vehicle may be defined as a moving object, capable of transporting persons and/or animals and/or goods. A vehicle may be for example: a car, a bicycle, a truck, a plane, a drone, a robot, a scooter, etc.

The vehicles to which messages are sent may be organized in vehicle formations. A vehicle formation may be considered to be a set of interdependent vehicles that are moving in group under specific constraints. The interdependent vehicles may be moving within a given spatial range, either at a given spatial distance one from another (e.g., drones moving by forming a given shape), or within a given geographical area (e.g., autonomous vehicles are moving in a lane of a road). The constraints may be dictated by the environment in which vehicles move (e.g., for road vehicles constraints are dictated by the width and number of lanes, for robots and drones vehicles constraints are dictated by path planning). The geometric shape of a formation may be built under rules that also depend on the environment in which vehicles operate. The shape of the formation may change in response to changes in the external environment (e.g., when the number of lanes changes, when obstacles appear on the path of vehicles) and/or when vehicles join or leave the formation.

For example, the vehicles in a vehicle formation may be moving at the same speed and/or on a same lane on a road. For example, the vehicles in a vehicle formation may be moving by fulfilling distance requirements between vehicles. For example, the vehicles in a vehicle formation may be moving together by forming a specific shape (e.g., an arrowhead). For example, the vehicles in a vehicle formation may be moving while forming a specific network topology (e.g., with a network topology in the form a star with all nodes connected to a central node, each vehicle corresponding to a node). For example, the vehicles in a vehicle formation may be vehicles that form a local subnetwork of a vehicle network in order to exchange information that is specific to a given vehicle formation.

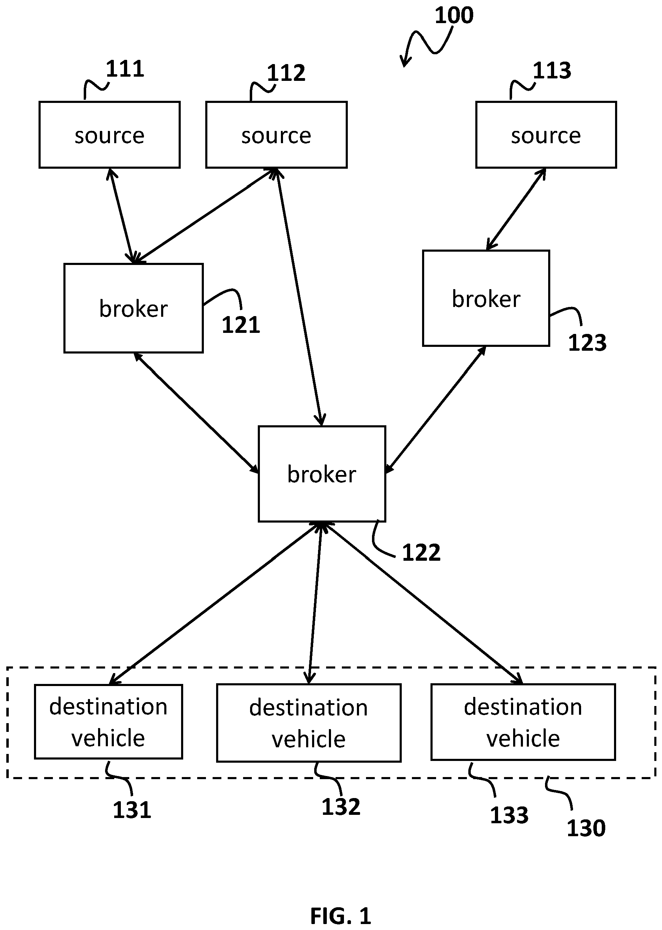

FIG. 1 represents in a schematic and simplified way a communication system 100 according to an example.

The communication system 100 includes in this example 3 message sources 111, 112, 113 but may include any number of message sources. The communication system 100 includes in this example 3 message destinations corresponding to destination vehicles 131, 132, 133 but may include any number of message destinations. The communication system 100 includes in this example 3 message brokers 121, 122, 123 but may include any number of message brokers. Each of the message sources, message destinations, and brokers is a node of a communication network. The destination vehicles 131, 132, 133 are assumed to be part of a same vehicle formation 130.

The transmission of messages in the communication system 100 may be performed according to the Pub/Sub paradigm, whether the Pub/Sub implementation supports or not explicit priority management.

The publisher/subscriber paradigm is a message communication paradigm applied to distributed nodes and in which one or more publishers (sources of messages) produce messages (events) that are consumed by subscribers (destination of messages). Publishers and subscribers exchange information asynchronously, without interacting directly. Subscribers share a common knowledge on a set of available topics and every published message is labelled with one of these topics. A subscriber can register its interest in one or more topics, and then it receives all published messages related to these topics. A message transmitted according to a Pub/Sub paradigm is referred to herein as a "Pub/Sub message".

Each of message brokers 121, 122, 123 is associated with at least one vehicle formation and in charge of transmitting messages to vehicles in the associated vehicle formation. The broker associated with a vehicle formation 130 may be located in one of the vehicles 131, 132, 133 of the vehicle formation (for example, in the leader of the vehicle formation) or in a fixed apparatus (for example, in an edge of a vehicular network infrastructure).

There may be one or more brokers in a transmission path between a message source and a destination vehicle. As an example in FIG. 1, there is:
- a transmission path from source 111 to destination 131 through brokers 121 and 122;
- a transmission path from source 112 to destination 132 through brokers 121 and 122;
- a transmission path from source 112 to destination 132 through only one broker 122;
- a transmission path from source 113 to destination 133 through brokers 123 and 122;
- etc.

The expressions "broker device" or "message broker" or simply "broker" are used herein to define a device acting as a communication relay in a transmission path between message source(s) 111, 112, 113 and message destination(s) 131, 132, 133. There may be one or more message brokers 121, 122, 123 in a given transmission path between a given message source and a given message destination. There several transmission paths between a given message source and a given message destination.

Each broker may include one or more message queues and be configured to receive message flows from message sources, store messages in message queues and control transmission of the stored messages to destination vehicles.

In embodiments, a broker is configured to apply an internal priority mechanism for controlling occupancy of the message queues. The expressions "local priorities" or "internal priorities" or "virtual priorities" are used herein to indicate that the assigned priorities are assigned locally by the broker device and used internally (i.e., locally), e.g., for optimization of the processing of the messages performed by the broker.

The processing performed by a broker for the messages may include several functions including for example: priority assignment, queue occupancy management, dispatch of incoming message(s) to message queues, message extraction from message queues, message transmission to destination vehicle(s), message reception.

In embodiments, internal priorities are assigned by the broker by taking into account vehicle formation information related to the vehicle formation to which the destination vehicles belong. This allows to adapt the assigned priority to the needs and specificity of the vehicle formation and the vehicles in the vehicle formation.

In embodiments, internal priorities are assigned by the broker based on queue related information like the occupancy rate of one or more message queues, the lowest priority in a scale of priorities associated respectively with the message queues. This allows to adapt the assigned priority to the occupancy rate of one or more message queues.

In embodiments, internal priorities are assigned by the broker based on source related information like the message production rate of the source of the message. This allows to give more priority to messages from source with low production rate.

In embodiments, internal priorities are assigned by the broker based on historical data like: a number of times the message was rejected in the past by the apparatus due to full message queues, statistical data generated for one or more messages received by the broker, etc. This allows to give more priority to messages having been rejected at least one time. In embodiments, the internal priority may increase as a function of the number of times the message was rejected in the past by the apparatus due to full message queues.

In embodiments, the "internal priorities" may be used in replacement of so called "external priorities", i.e. priorities assigned to a message by an external entity, distinct from the broker. An external priority may be a priority assigned by a source of the message to the message. The external priority may be dependent of the urgency of the message, while the internal priority is set mainly to optimize the management of the message queues of the broker. In embodiments, the internal priority assigned to a message may be determined based on its external priority, if any, to account for the urgency of the message. In embodiment, the external priority of a message may be used to increase/decrease the internal priority of this message.

The internal priority mechanism may be used both for implementations that do not support explicit prioritization of messages and for implementations that supports explicit prioritization.

In embodiments, the internal priorities assigned by a given broker may be used locally by the broker only and be discarded after transmission of the messages by the broker. These embodiments may be used for example, when the messages are transmitted according to a publisher/subscriber paradigm whose implementation does not explicitly support priority mechanisms. Alternatively, the internal priority may be stored (e.g., in a message header) in the message and remains in this message after transmission of the message so as to be used, e.g., from broker to broker, along the entire transmission path (e.g., from publisher to subscriber) of the message. The internal priority may replace in the message the external priority set by a message source, if any.

The internal priority mechanism can be implemented without opening/closing subscriptions to topics or creating (new) topics to which vehicles may subscribe.

The internal priority mechanism can be implemented for brokers (as well as the publishers and subscribers) that may move in space and time and may be physically located within vehicles or in fixed devices (e.g., in the edge architecture of vehicle network(s)).

In embodiments, the internal priority mechanism disclosed herein aims to reduce congestion and overflow of message queues in vehicular networks that may be due to message flows with different urgencies, with the minimum impact on communications (e.g., latency and order of message), and in a way that is transparent to both message sources (e.g., publishers) and message destination (e.g., subscribers).

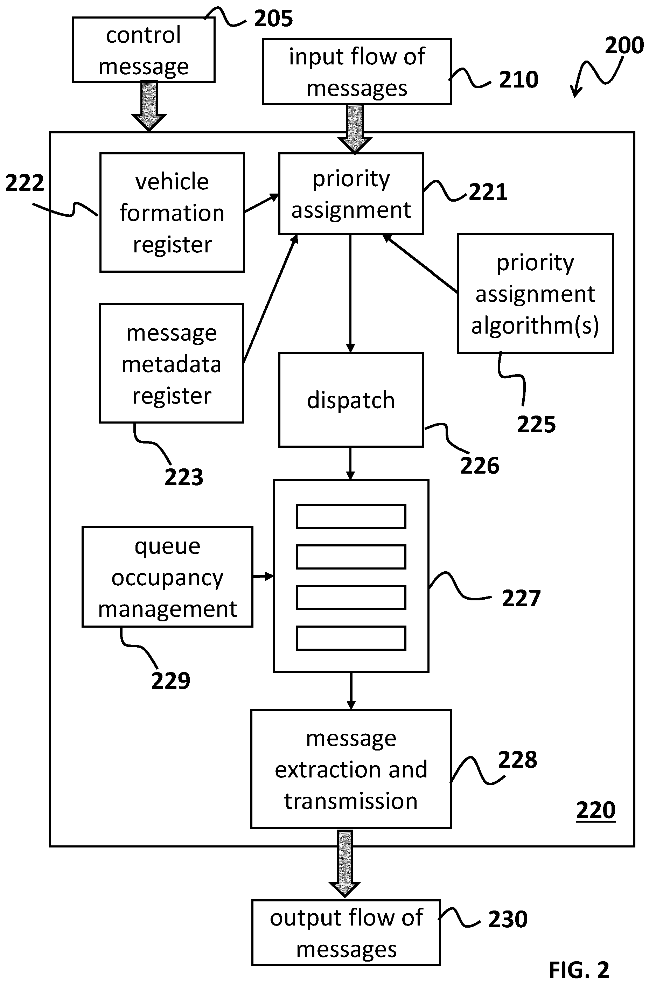

FIG. 2 is a functional diagram of a broker 200 according to an example.

The broker may be a broker associated with a given vehicle formation and configured to manage transmission of messages to vehicles in this given vehicle formation.

The broker 200 includes a set 227 of message queues. In embodiments, each message queue is implemented as a FIFO (First In First Out) buffer. In embodiments, each message queue of a broker is associated with a priority level on a scale of priorities that may be assigned by the broker and the internal priorities assigned by a broker correspond to a priority level in this scale of priorities.

The broker 200 is configured to receive one or more input flows 210 of messages and to generate one or more output flows 230 of messages.

The broker 200 includes a priority assignment function 221 for assigning internal priorities to incoming messages, a dispatch function 226 for dispatching incoming message(s) to message queues, a message extraction and transmission function 228.

In embodiments, the broker 200 may include a vehicle formation register 222. The vehicle formation register 222 is configured to store information related to a current vehicle formation: e.g., shape, type of vehicle, information about individual vehicles such as constructor and model, vehicle position(s) within the formation, date at which a vehicle joined a formation, date at which a vehicle will leave the formation, etc.

In embodiments, the broker 200 may include a message metadata register 223. The message metadata register may include message metadata like: statistics related to message(s) that has been received by the broker 200, such as counters for the messages produced by a given publisher and consumed by a given subscriber, information related to messages that were rejected due to broker memory overflow (e.g., number of times a given message was rejected), popularity of a given topic expressed as the publication rate of messages for this given topic, etc.

The priority assignment function 221 is configured for determining, from a scale of priorities, an internal priority for a received message. The internal priority is determined by applying a priority assignment algorithm among a set of priority assignment algorithms 225. Once an internal priority has been assigned to a message, the considered message is stored by the message dispatch function 226 in the message queue corresponding to the internal priority assigned to the received message.

A priority assignment algorithm is based at least on vehicle formation information, i.e. information related to the vehicle formation. Any vehicle formation information disclosed herein may be used. The priority assignment algorithm may be specific to the vehicle formation and/or be configured specifically for a given vehicle formation. This allows to account for the needs of the given vehicle formation.

The vehicle formation information may include various types of information:
- metadata associated with one or more vehicles in the vehicle formation (for example: a type of vehicle, vehicle ID, role and relative position of vehicle within the formation, maximum speed of a vehicle, maximum/minimum number of passengers per vehicle);
- metadata associated with the vehicle formation (for example: a number of vehicles in the vehicle formation, maximum/minimum inter-vehicle and/or inter-formation distance, maximum/minimum distance between a formation leader and any other vehicle in the formation);
- metadata associated with a route followed by one or more vehicles in the vehicle formation (for example: a start point of the route, an end point of the route, a length of the route, a duration of the route, crosspoints with other routes, etc);
- information in a header or payload of the considered message (for example, a priority level, a type of service, a desirable latency, a desirable Quality of Service, etc,).

The vehicle formation information may include various types of information:
- information related to one or more times one or more vehicles joined the vehicle formation (for example for a given message having a destination vehicle: a date when the destination vehicle joined the vehicle formation, a difference between the time when the destination vehicle joins the vehicle formation and a time when the oldest vehicle in the vehicle formation joins the vehicle formation);
- information related to a position of a vehicle in the vehicle formation (for example for a given message having one or more destination vehicles: the position of at least one of the one or more destination vehicles);
- information related to a distance between two vehicles in the vehicle formation (for example for a given message having a destination vehicle: a distance between a formation leader and a destination vehicle for the message, a distance between two successive vehicles in the vehicle formation of the destination vehicle, a distance between a first vehicle and a last vehicle in the vehicle formation of the destination vehicle);
- information related to a speed of one or more vehicles in the vehicle formation (for example for a given message having one or more destination vehicles: the speed of at least one of the one or more destination vehicles);
- information related to a route followed by one or more vehicles in the vehicle formation (for example for a route followed by a destination vehicle of a message: a start point of the route, an end point of the route, a length of the route, a duration of the route, etc);
- information related to a type (e.g., drone, car, plane, robot, etc) of one or more destination vehicle(s) in the vehicle formation;
- information related to a role (leader, last vehicle, intermediate vehicle, leader follower, etc) of a destination vehicle in the vehicle formation (for example for a given message having a destination vehicle: the role of the destination vehicle in the vehicle formation);
- information related to a topology of the vehicle formation (for example: a graph representing the topology of the vehicle formation, the longest path in a graph representing the topology of the vehicles in the vehicle formation, the type of topology, etc).

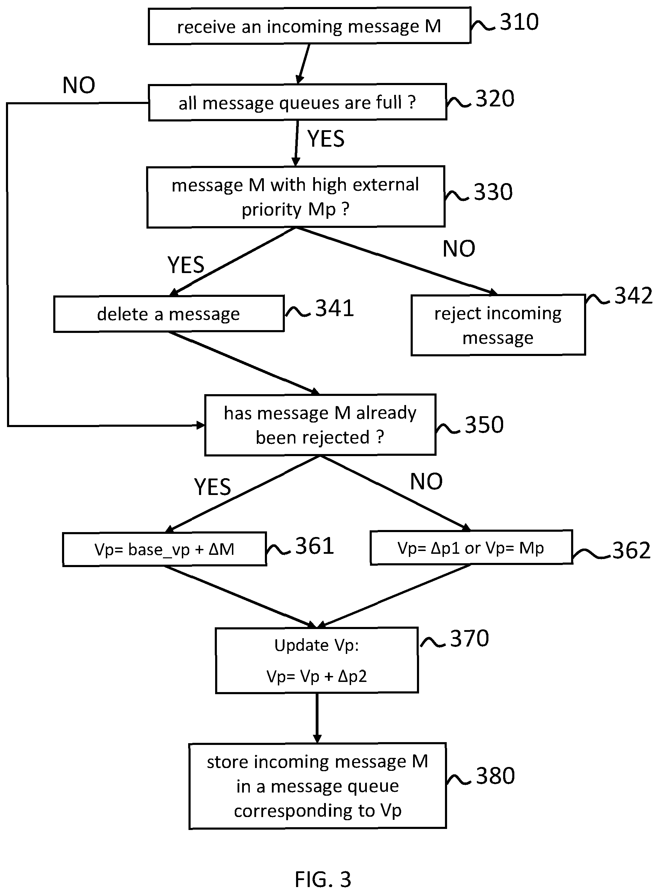

The priority assignment function 221 may be configured to determine the internal priority as a sum of a basis priority and an incremental priority. An example is described by reference to FIG. 3.

In embodiments, the incremental priority is determined on the basis of a number of times the message was rejected in the past by the apparatus due to full message queues. This allows to increase the internal priority for a message that has already been rejected such that its internal priority increases as a function of the number of times the message was rejected in the past. In alternative or in combination, the incremental priority may be determined on the basis of a message production rate of the source of the message: this allows for example to increase the internal priority of messages from sources that produce messages less frequently and to decrease the internal priority of messages from sources that produce messages more frequently.

In embodiments, the basis priority is either an external priority assigned to the message by an entity external to the apparatus or the lowest priority in the scale of priorities. Combining such a basis priority with the incremental priority adjusted by the broker allows to take into account any existing external priority and without interfering with existing priority mechanisms with a weighting mechanism.

The internal priority mechanism can thus be implemented without interfering with existing priority mechanisms that are specific to existing Pub/Sub implementations (e.g., static priority settings), such that the internal priority mechanism is compliant with implementations already supporting some priority mechanism. The internal priority mechanism can be implemented without requiring changes to existing Pub/Sub implementation(s).

In embodiments, the broker 200 may include a queue occupancy management function 229. The queue occupancy management function 229 may be configured to monitor the occupancy rates of the message queues 227. The queue occupancy management function 229 may be configured to transfer at least one message from a first message queue to a second message queue associated with a higher priority level higher. This may be done to limit overflows and retransmissions due to messages not being acknowledged by destination vehicles before the acknowledgement deadline. For example, if the occupancy of high-priority queues is low (e.g., below a threshold), the queue occupancy management function 229 may transfer old messages from low-priority queues to high-priority queues so that messages can be dispatched sooner.

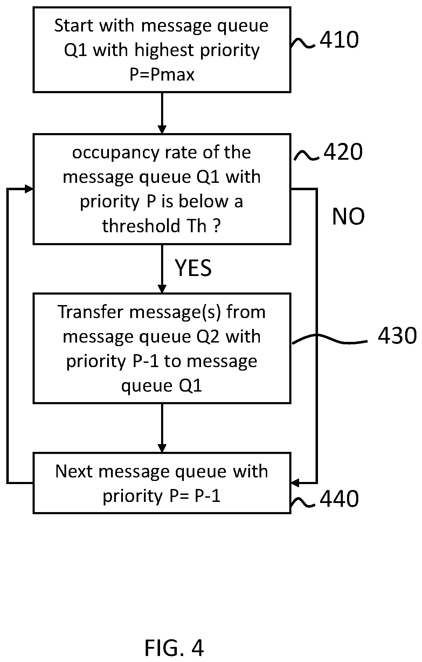

The queue occupancy management function 229 may be configured to transfer at least one message from a first message queue to a second message queue on the basis of at least one of one or more parameters. The one or more parameters may include at least one of: a respective occupancy rates of the first and second message queues and/or a residence time of the at least one message in the first message queue or the respective priorities of the first and second message queues. An example is described by reference to FIG. 4.

Other parameters may be taken into account for controlling transfer of message from a message queue to another:
- at least one of metadata associated with one or more message queues (e.g., average ratio between queue actual occupancy and queue capacity computed over a given time window, time distance between successive peaks/troughs in the occupancy of the queue),
- statistical data generated for one or more messages received by the broker;
- information in a header or payload of one or more messages in one or more message queues (e.g., type of service, maximum tolerable latency, etc).

The type of service associated to the message can be used to drive transfer of messages between queues (e.g., control/emergency messages for braking should always be transferred to the higher priority queue). The maximum tolerable latency can be used to drive transfer of messages between queues (e.g., messages associated to low desirable latency should always be moved to the higher priority queue).

The message extraction and transmission function 228 is adapted for controlling extraction of messages from message queues for transmission to destination vehicle(s) according to an extraction order based at least on the respective priorities of the plurality of message queues.

This message extraction and transmission function 228 may evacuate queues by priority order and/or in a Round-Robin fashion. It can be seen as a sort of scheduler that decides the output dispatch order of messages.

In embodiments, a number of time slots is assigned to each of the message queues on the basis of the respective priority of the considered message queue such that the higher the priority, the higher the number of slots. Thus a fixed number of evacuation slots (time intervals of fixed duration) are reserved for each message queue for the transmission of messages in the considered message queue. The message queues may then be processed one after the other by complying with the assigned number of slots, for example by priority order and/or in a Round-Robin fashion.

The message extraction and transmission function 228 may be configured to control extraction of messages from the plurality of message queues according to the extraction order and by complying with the number of time slots respectively assigned to the message queues. The message extraction and transmission function 228 takes into account the priority levels associated with the message queues but does not consider the internal priority of individual messages within a message queue: due to potential transfer of messages between message queues (see FIG. 4) with different priority levels, the message queues can contain messages with different internal priorities.

One or more control messages 205 may be received by the broker. A control message may be sent by another broker, by a user, by a network controller, etc. A control message may be used to select a priority assignment algorithm among a set of priority assignment algorithms. A control message may be used to configure a priority assignment algorithm. A control message may be used to select a replacement policy among a set of replacement policies.

As an example, selection of a priority assignment algorithm may be done upon reaction to specific events like accidents, road congestions, etc. This may be done in order to adapt the behaviour of the broker to state of the vehicle formation associated with the broker. In embodiments, the priority assignment algorithm may be selected as a function of the topic of the message such that depending on the content of the messages the assigned priorities are adapted. The priority assignment algorithm may be specific to the vehicle formation and/or be selected for the vehicle formation. This allows to account for the needs of the given vehicle formation. The priority assignment algorithm may be selected and/or configured by a vehicle (e.g., the leader) in the vehicle formation.

A control message may be used to provide or update vehicle formation information (e.g., from the vehicle formation register) regarding one or more vehicle formations.

As an example, in case a vehicle leaves a current vehicle formation associated with the broker for a new vehicle formation, the vehicle formation information may be transferred by the broker of the current vehicle formation to a leader of the new vehicle formation.

FIG. 3 shows a flowchart of a method for assigning internal priorities according to an example. The steps of the method may be implemented by a broker (e.g., by the priority assignment function 221 of the broker 200) according to any example described herein.

While the steps are described in a sequential manner, the person skilled in the art will appreciate that some steps may be omitted, combined, performed in different order and / or in parallel.

In step 310, the broker receives an incoming message M. The broker may store a time of arrival of the incoming message M in the message metadata register 223. Step 320 may be executed after step 310.

In step 320, the broker determines whether all message queues are full. If all messages are full, step 330 is executed after step 320. Otherwise, step 350 is executed after step 320.

In step 330, the broker determines whether the incoming message M has already a priority assigned by an external entity (e.g., the source of the message) and whether this external priority Mp is high, i.e., whether this external priority Mp is above a threshold. If the incoming message M has a high external priority Mp, then step 341 is performed after step 330. Otherwise step 342 is performed after step 330.

In step 341, the broker deletes from a message queue message and replaces the deleted message by the incoming message M.

Various replacement policies may be used. According to a first replacement policy, the deleted message may be a message in a message queue associated with the highest priority. According to a second replacement policy, the deleted message may be a message in a message queue with the lowest priority that has been produced by a message source (e.g., publisher) with the lowest transmission frequency. The transmission frequency of message sources may be extracted from the time of arrival stored for messages in the message metadata register 223.

The replacement policy to be used may be selected by means of a control message.

In step 342, the broker rejects the incoming message M and update the message metadata register by storing a number of rejection(s) for the incoming message M in association with an identifier of the incoming message.

Step 350 may be executed after step 341. In step 350, the broker determines whether the incoming message M is a message already received and rejected by the broker by querying the message metadata register 223. If the whether the incoming message M has already been received and rejected by the broker, step 361 is executed after step 350. Otherwise step 362 is executed.

In step 361, where the incoming message M has already been rejected in the past due to memory overflows, the broker determines an internal priority vp by applying a priority assignment algorithm.

In embodiments, the broker may determine the internal priority vp for the incoming message as the sum of a basis priority base_vp and an incremental priority ΔM: *vp* = *base*_*vp +* Δ*M*.

The value for *base*_*vp* may be the external priority, if any, assigned to the incoming message (e.g., either by a user, by a message source, or by an upstream broker, etc). Otherwise, the value for *base*_*vp* may be the value of the lowest priority in the scale of priorities assigned by the broker.

The value of Δ*M* may be or be a function of the number of past rejections of the incoming message M: the higher this number, the higher the internal priority.

In step 362, where the incoming message M has never been rejected in the past due to memory overflows, the broker determines an internal priority for the incoming message. The broker determines an internal priority vp by applying a priority assignment algorithm.

The value for *vp* may be the external priority, if any, assigned to the incoming message (e.g., either by a user, by a message source, or by an upstream broker, etc). Otherwise, the internal priority may be computed *vp* = Δ*p* , where Δ*p* is the inverse of the production rate of the source of M. The production rate may be computed as the inverse of the number of messages produced by the source of M. This allows to give a high virtual priority to messages that are produced infrequently.

Step 370 may be executed after step 361 or after step 362. In step 370, the broker updates the internal priority vp: Vp= Vp + Δp2.

The priority increase Δp2 of vp may be computed according to a priority assignment algorithm based on vehicle formation information stored in a vehicle formation register 222. The priority increase Δp2 applied to vp may be computed according to the priority assignment algorithm based on the message topic.

Example use cases for using vehicle formation information for the computation of the internal priorities are provided which show how the vehicle formation information may be used to increase or decrease internal priority assigned to messages as for implementing specific use cases.

According to an example use case, adapted for safety and traffic control messages, the priority assignment algorithm may compute a priority increase Δp2 according to the distance between the leader vehicle and the message destination vehicle. So that the further the destination vehicle from the broker, the higher the priority of the messages it receives.

According to an example use case, adapted for navigation messages, the priority assignment algorithm may compute a priority increase Δp2 according to the inverse of the date when a vehicle joined the formation. Such that vehicles which joined the formation recently, are prioritized over vehicles which joined the formation a long time ago.

According to an example use case, the broker may identify the destination vehicle S for a given message M and the oldest vehicle O in the formation and compute a ratio between the time when the destination vehicle S joined the formation and the time when the oldest vehicle O joined the formation. This ratio may be used to compute an internal priority, a basis priority or an incremental priority for the message M such that the internal priority increases when the ratio decreases so that to increase the internal priority of messages for vehicles having joined recently the vehicle formation.

According to an example use case, the broker may obtain a graph of the vehicle formation where each node of the graph represents a vehicle, determine the distance D between the node representing the source of a message M and the node representing the destination vehicle of the message as well as the graph diameter (i.e., longest shortest path in the graph) and then compute the ratio between D and the graph diameter. This ratio may be used to compute an internal priority, a basis priority or an incremental priority for the message M such that the internal priority increases when the ratio increases so that to increase the internal priority of messages for vehicles that are far away from the source of the message M.

According to an example use case, the broker may determine a distance between the destination vehicle and the formation leader and use this distance to compute an internal priority, a basis priority or an incremental priority for the message M such that the internal priority increases when the distance increases. Messages for vehicles that are further away from the formation leader will then have higher priority. This may be useful to assign higher priorities to vehicles that are located at the edge of the vehicle formation (e.g., for military drones, these are the first vehicles to engage contact with the enemy and the message they receive must have higher priority).

According to an example use case, the broker may obtain a graph of the vehicle formation where each node of the graph represents a vehicle and assign a weight to all edges in the graph. This weight (for edge A-B, between vehicle A and vehicle B) may be the difference between the average speed of vehicle A and the average speed of vehicle B, computed over a variable time window. Then the edges may be ranked based on their respective weights, in increasing order. The internal priority, the basis priority or the incremental priority may be computed for the message M such that the internal priority increases for messages for destination vehicle(s) with a greater average speed differential. This is especially useful in train of vehicles (linear chain of vehicles) to identify vehicles that do not respect the constraint of moving at constant speed. These vehicles have potential speed control problems and the message they receive need to be assigned higher priorities in order for these vehicles to react faster to events.

Step 380 may be executed after step 370. In step 380, the broker stores the incoming message M in a message queue associated with a priority level corresponding to the internal priority vp.

The priority assignment algorithm to be used in step 361 and/or in step 362 and/or in step 370 may be selected by means of a control message as described herein. In embodiments, the priority assignment algorithm may be selected as a function of the topic of the message such that depending on the content of the messages the assigned priorities are adapted.

The internal priority mechanism disclosed herein can be applied the two following cases:
- where the Pub/Sub implementation does not support explicit priority mechanisms for messages: in such case, the internal priorities are used locally, within a given broker and are not kept outside of a broker;
- where the Pub/Sub implementation supports explicit prioritization of messages: in this case, messages have a specific field with a priority value. The internal priority mechanism may be used to update this priority value, store the updated priority value as part of the message such that the updated priority value is visible outside of the specific broker where the priority has been updated.

The method described here allow to reduce latency and network congestion due to retransmission of messages to vehicles in a vehicle formation by a broker. An increased efficiency related to usage of memory where to store messages is achieved.

The assigned internal priorities account for retransmission of messages (e.g., due to rejection of messages).

The method prevents high priority messages to be rejected if the broker's memory is full (which is frequently the case for memories with small capacities).

When relying on message ordering (e.g., within a broker memory's FIFOs), issues may arise when subscribers are not able to keep up with the rate of publishing of the source(s) of the message. This can be avoided by applying the local priority assignment mechanism by the broker.

FIG. 4 shows a flowchart of a method for transferring messages between message queues according to an example. The steps of the method may be implemented by a broker (e.g., by the queue occupancy management function 229 of the broker 200) according to any example described herein.

While the steps are described in a sequential manner, the person skilled in the art will appreciate that some steps may be omitted, combined, performed in different order and / or in parallel.

A table T may be used to store for each message in a first message queue Q1, its residence time and the message identifier.

In step 410, the method starts by selecting the message queue Q1 with highest priority level P=Pmax.

In step 420, the occupancy rate of the message queue Q1 is compared to a threshold. If the occupancy rate of the message queue Q1 with priority level P is below a given threshold Th (e.g., 50 %), the broker may transfer in step 430 messages from message queue Q2 with priority P- 1 to message queue Q1 until the occupancy of Q1 goes above the threshold Th. Messages in Q2 may be transferred to Q1 according their residence time in Q2 such that oldest messages are transferred first. Upon execution of this process, table T is updated.

If in step 420 the occupancy rate of the message queue Q1 with priority level P is not below the threshold Th, step 440 may be executed after step 420.

This process may be executed iteratively for all queues but the one with lowest priority: in step 440, the next message queue with priority P=P-1 is selected as Q1 and step 420 is executed again after step 440 for this next message queue.

Due to potential transfer of messages between message queues with different priority levels, the message queues can contain messages with different internal priorities, but the extraction of messages from the message queues takes into account the priority levels associated with the message queues but does not consider the internal priority of individual messages within a message queue.

This mechanism of transfer from one queue to another allows to speed up the transmission of low priority message in case of available memory space. For example, if the number of time slots assigned to each of the message queues is such that the higher the priority level of the message queue, the higher the number of slots, the low priority messages transferred to a message queue with higher priority will be transmitted sooner.

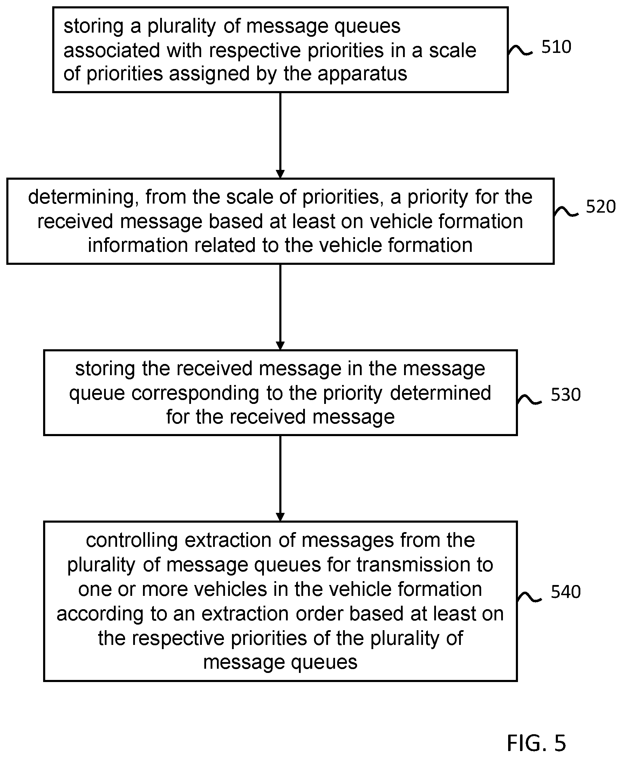

FIG. 5 is a flowchart illustrating a method for transferring messages to vehicles in a vehicle formation using message queues according to an example.

While the steps are described in a sequential manner, the person skilled in the art will appreciate that some steps may be omitted, combined, performed in different order and / or in parallel.

The method may be performed by an apparatus (e.g., a computing device) used as a broker for a vehicle formation as described herein, for example by reference to FIG. 1 or 2.

The broker may be associated with a given vehicle formation and in charge of transmitting messages to vehicles in the associated vehicle formation. The apparatus performing the functions of the broker may be located in one of the vehicles of the vehicle formation or may be external to all the vehicles of the vehicle formation.

In step 510, a plurality of message queues is stored by the apparatus. Each of the plurality of message queues is associated with a respective priority in a scale of priorities assigned locally by the apparatus: these priorities correspond to internal priorities as described herein.

In step 520, a message to be transmitted to one or more destination vehicles in a vehicle formation is received by the apparatus.

In step 530, the apparatus determines, from the scale of priorities, a priority for the received message by applying a priority assignment algorithm based at least on vehicle formation information related to the vehicle formation. The assigned priority is an "internal priority" as described herein.

Generally, assigning a priority to the message may be performed according to any of the embodiments described by reference to FIG. 3.

The priority assignment algorithm may be specific to the vehicle formation. The priority assignment algorithm may be selected and/or configured by a vehicle (e.g., a leader) in the vehicle formation. The priority assignment algorithm may be selected and/or configured by means of a control message. The apparatus may for example include means for receiving a control message for configuring the priority assignment algorithm.

The vehicle formation information may include at least one of: metadata associated with one or more vehicles in the vehicle formation, metadata associated with the vehicle formation, metadata associated with a route followed by one or more vehicles in the vehicle formation.

The vehicle formation information may include at least one of: information related to one or more times one or more vehicles joined the vehicle formation; information related to a position of a destination vehicle in the vehicle formation; information related to a distance between two vehicles in the vehicle formation; information related to a route followed by one or more vehicles in the vehicle formation; information related to a type of vehicles in the vehicle formation; information related to a role of the one or more destination vehicle(s) in the vehicle formation; information related to a topology of the vehicle formation.

The priority assignment algorithm may be based on at least one: one or more occupancy rates of one or more message queues, an external priority assigned to the message by an entity external to the apparatus, a message production rate of the source of the message, a number of times the message was rejected in the past by the apparatus due to full message queues, the lowest priority in the scale of priorities, statistical data generated for one or more messages received by the apparatus, information in a header or payload of the message, a type of the message, a topic or content of the message.

The determined priority may increase as a function of the number of times the message was rejected in the past by the apparatus due to full message queues.

The priority may be determined on the basis of the occupancy rates of the messages queues.

The priority may be determined for the message as a sum of a basis priority and an incremental priority. The incremental priority may be determined on the basis of a number of times the message was rejected in the past by the apparatus due to full message queues or a message production rate of the source of the message. The basis priority may be either an external priority assigned to the message by an entity external to the apparatus or the lowest priority in the scale of priorities.

In step 540, the apparatus stores the received message in the message queue corresponding to the priority determined for the received message.

In step 550, the apparatus controls extraction of messages from the plurality of message queues for transmission to one or more vehicles in the vehicle formation according to an extraction order based at least on the respective priorities of the plurality of message queues.

In embodiments, to control extraction of messages from the plurality of message queues, a number of time slots is assigned to each of the message queues on the basis of the respective priority of the considered message queue. The apparatus may be configured to control extraction of messages from the plurality of message queues by processing the message queues in the extraction order and by complying with the number of time slots respectively assigned to the message queues.

In embodiments, the apparatus may be configured for transferring at least one message from a first message queue to a second message queue on the basis of at least one of: the respective occupancy rates of the first and second message queues, a residence time of the at least one message in the first message queue or the respective priorities of the first and second message queues, metadata associated with one or more message queues, statistical data generated for one or more messages received by the apparatus, information in a header or payload of one or more messages in one or more message queues.

Generally, transferring at least one message from a first message queue to a second message queue may be performed according to any of the embodiments described by reference to FIG. 4.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although steps of a method or process may be described in a sequential manner, some of the steps may be performed in parallel, concurrently or simultaneously. Also some steps may be omitted, combined or performed in different order.

One or more or all operation(s) of a method, process, function, engine, block, step described herein may be implemented in hardware, software, firmware, middleware, microcode, or any suitable combination thereof.

When implemented in software, firmware, middleware or microcode, instructions to perform the considered operation(s) may be stored in a computer readable medium that may be or not included in a computing device (or respectively a computing system) configured to execute the instructions. The instructions may be transmitted over the computer-readable medium and be loaded onto the computing device (or respectively computing system). The instructions are configured to cause the computing device (or respectively computing system) to perform the considered operation(s). For example, as mentioned above, at least one memory may include or store instructions, the at least one memory and the instructions may be configured to, with at least one processor, cause the computing device (or respectively computing system) to perform the considered operation(s).

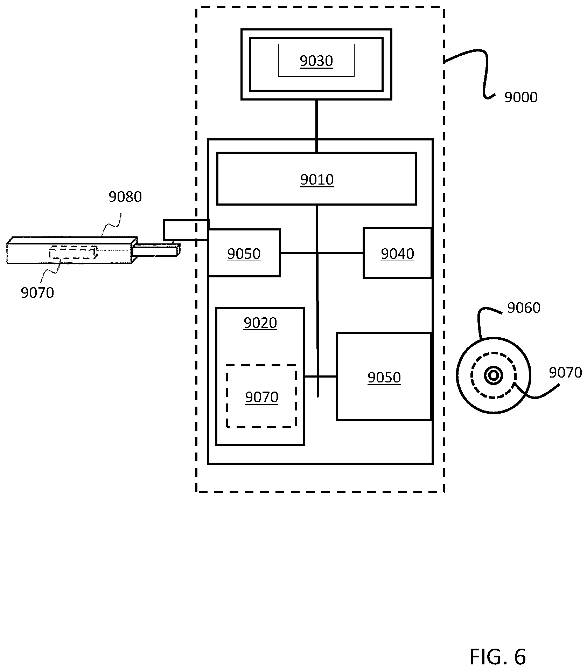

FIG. 6 illustrates an example embodiment of an apparatus 9000, as an example of computing device. The apparatus 9000 may be configured to perform one or more functions of a broker disclosed herein. The apparatus 9000 may be configured to perform one or more or all steps of any method disclosed herein.

As represented schematically, the apparatus 9000 may include at least one processor 9010 and at least one memory 9020. The apparatus 9000 may include one or more communication interfaces 9040 (e.g., network interfaces for access to a wired / wireless network, including Ethernet interface, WIFI interface, etc) connected to the processor and configured to communicate via wired / non wired communication link(s). The apparatus 9000 may include user interfaces 9030 (e.g., keyboard, mouse, display screen, etc) connected with the processor. The apparatus 9000 may further include one or more media drives 9050 for reading a computer-readable storage medium (e.g., digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may be or include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

The means may include at least one processor and at least one memory including at least one memory storing instructions that, when executed by the at least one processor, cause an apparatus to perform the considered function(s). The means may include circuitry (e.g., processing circuitry) configured to perform the considered function(s).

As used in this application, the term "circuitry" may refer to one or more or all of the following:
(a) hardware-only circuit implementations (such as implementations in only analogue and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together; and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g., a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, when the term "and/or" is used in a list of items, it implies that the list may include any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed devices, systems and methods without departing from the scope of what is disclosed. Such embodiments should be understood to fall within the scope of the present disclosure as determined based upon the claims and any equivalents thereof.

## Claims

1. An apparatus comprising means for:
storing a plurality of message queues associated with respective priorities in a scale of priorities assigned locally by the apparatus;
receiving a message to be transmitted to one or more destination vehicles in a vehicle formation;
determining, from the scale of priorities, a priority for the received message by applying a priority assignment algorithm based at least on vehicle formation information related to the vehicle formation;
storing the received message in the message queue corresponding to the priority determined for the received message;
controlling extraction of messages from the plurality of message queues for transmission to one or more vehicles in the vehicle formation according to an extraction order based at least on the respective priorities of the plurality of message queues.

2. The apparatus of claim 1, wherein the vehicle formation information comprises at least one of: metadata associated with one or more vehicles in the vehicle formation, metadata associated with the vehicle formation, metadata associated with a route followed by one or more vehicles in the vehicle formation.

3. The apparatus of claim 1 or 2, wherein the vehicle formation information comprises at least one of: information related to one or more times one or more vehicles joined the vehicle formation; information related to a position of a destination vehicle in the vehicle formation; information related to a distance between two vehicles in the vehicle formation; information related to a route followed by one or more vehicles in the vehicle formation; information related to a type of vehicles in the vehicle formation; information related to a role of the one or more destination vehicle(s) in the vehicle formation; information related to a topology of the vehicle formation.

4. The apparatus of any claims 1 to 3, wherein the priority assignment algorithm is further based on at least one: one or more occupancy rates of one or more message queues, an external priority assigned to the message by an entity external to the apparatus, a message production rate of the source of the message, a number of times the message was rejected in the past by the apparatus due to full message queues, the lowest priority in the scale of priorities, statistical data generated for one or more messages received by the apparatus, information in a header or payload of the message, a type of the message, a topic or content of the message.

5. The apparatus of any of the preceding claims, wherein a number of time slots is assigned to each of the message queues on the basis of the respective priority of the considered message queue, wherein the means for controlling extraction of messages from the plurality of message queues are configured to process the message queues in the extraction order and by complying with the number of time slots respectively assigned to the message queues.

6. The apparatus of any of the preceding claims, wherein the means for determining the priority are configured to determine the priority as a sum of a basis priority and an incremental priority.

7. The apparatus of claim 6, wherein the incremental priority is determined on the basis of at least one of: a number of times the message was rejected in the past by the apparatus due to full message queues and a message production rate of the source of the message.

8. The apparatus of claim 6 or 7, wherein the basis priority is either an external priority assigned to the message by an entity external to the apparatus or the lowest priority in the scale of priorities.

9. The apparatus of any of the preceding claims, wherein the apparatus comprises means for transferring at least one message from a first message queue to a second message queue on the basis of at least one of: the respective occupancy rates of the first and second message queues, a residence time of the at least one message in the first message queue or the respective priorities of the first and second message queues, metadata associated with one or more message queues, statistical data generated for one or more messages received by the apparatus, information in a header or payload of one or more messages in one or more message queues.

10. The apparatus of any of the preceding claims, wherein the determined priority increases as a function of the number of times the message was rejected in the past by the apparatus due to full message queues.

11. The apparatus of any of the preceding claims, wherein the priority assignment algorithm is specific to the vehicle formation.

12. The apparatus of any of the preceding claims, comprising means for receiving a control message for configuring the priority assignment algorithm.

13. A method adapted for being executed by an apparatus, the method comprising:
storing a plurality of message queues associated with respective priorities in a scale of priorities assigned locally by the apparatus;
receiving a message to be transmitted to one or more destination vehicles in a vehicle formation;
determining, from the scale of priorities, a priority for the received message by applying a priority assignment algorithm based at least on vehicle formation information related to the vehicle formation;
storing the received message in the message queue corresponding to the priority determined for the received message;
controlling extraction of messages from the plurality of message queues for transmission to one or more vehicles in the vehicle formation according to an extraction order based at least on the respective priorities of the plurality of message queues.

14. A non-transitory computer readable medium comprises computer program instructions stored thereon for causing an apparatus to perform at least the following:
storing a plurality of message queues associated with respective priorities in a scale of priorities assigned locally by the apparatus;
receiving a message to be transmitted to one or more destination vehicles in a vehicle formation;
determining, from the scale of priorities, a priority for the received message by applying a priority assignment algorithm based at least on vehicle formation information related to the vehicle formation;
storing the received message in the message queue corresponding to the priority determined for the received message;
controlling extraction of messages from the plurality of message queues for transmission to one or more vehicles in the vehicle formation according to an extraction order based at least on the respective priorities of the plurality of message queues.
